# EUROPEAN PATENT APPLICATION

(11) **EP 1 547 902 A1**
(43) Date of publication of application: **29.06.2005**
(21) Application number: 03794075.6
(22) Date of filing: 04.08.2003
(51) Int. Cl.: B62D 1/18

(54) **VEHICLE POSITION ADJUSTMENT TYPE STEERING COLUMN DEVICE**

(30) Priority: 04.09.2002 JP 2002258402; 15.10.2002 JP 2002300631
(71) Applicant: NSK LTD.,, Shinagawa-ku, Tokyo 141-8560 (JP)
(72) Inventor: SAWADA, Naoki, Maebashi-shi, Gunma 371-0853 (JP); TOMARU, Masaki, Maebashi-shi, Gunma 371-0853 (JP); INOUE, Koji, Maebashi-shi, Gunma 371-0853 (JP); TAKANO, Toshimichi, Maebashi-shi, Gunma 371-0853 (JP)
(74) Representative: Baldwin, Mark
(86) International application number: PCT/JP2003/009863
(87) International publication number: WO 2004/022410

(57) **Abstract**

An apparatus comprises a vehicle body side bracket 4 having a vehicle body mount portion 4c to be mounted on a vehicle body and paired left and right opposed flat plate portions 4a, 4b, a steering column 2 having an expanded portion 13, formed by expanding a portion of a tubular material, that is to be in pressure contact with the pair of opposed flat plate portions 4a, 4b of the vehicle body side bracket;
a shaft 5 inserted through the pair of opposed flat plate portions 4a, 4b and the expanded portion 13 and adapted to adjust the distance between the pair of opposed flat plate portions4a, 4b as an operation lever 8 is rotated. The steering column 2 has a portion that is present in an area extending from the shaft 5 up to at least the vehicle body mount portion 4c and has a width substantially equal to the width of a penetrated portion of the expanded portion 13 at which the shaft 5 is inserted through.

## Description

### TECHNICAL FIELD

The present invention relates to a position adjustable steering column apparatus for a vehicle that has an expanded portion formed by expanding a portion of a tubular material of a steering column.

### BACKGROUND ART

In general, the steering apparatus for a vehicle is equipped with a tilt mechanism for changing the position of the steering column up and down so that the steering wheel will be adjusted to a position suitable for the driver. This tilt mechanism is provided with a lever-operated clamp mechanism. In the tilting operation, the clamp can be loosened by operating the lever so as to allow free movement of the steering column, and the clamp can be tightened after the position has been adjusted to maintain the constrained state of the steering column.

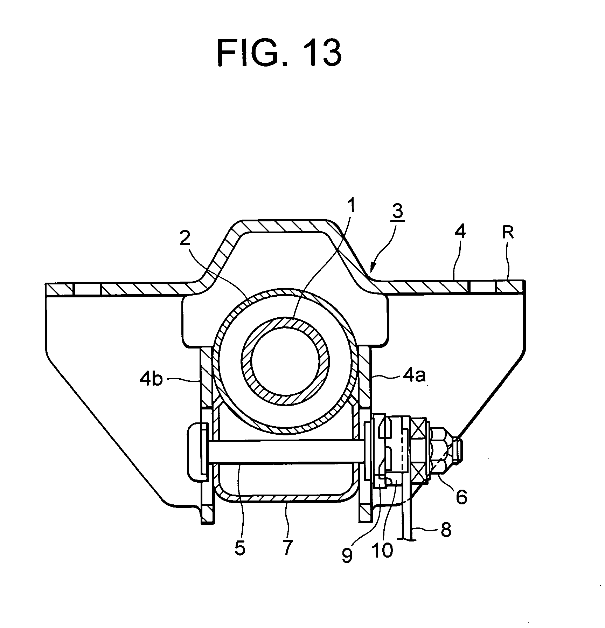

Specifically, as shown in Fig. 13, a steering apparatus is provided with a steering column 2 for supporting a steering shaft 1 along the axis by means of a bearing (not shown) and a clamp mechanism 3. The clamp mechanism 3 comprises a tilt bracket 4, a tilt bolt 5, a nut 6, a distance bracket 7, a tilt lever 8 and paired fixed and movable cams 9 and 10.

For example, as the movable cam 10 is rotated by a rotation of the tilt lever 8, the movable cam is shifted relative to the fixed cam 9. This causes a relative shift of the tilt bolt 5 in the axial direction. By this process, the distance bracket 7 is held between support portions 4a and 4b of the tilt bracket 4, so that the steering column 2 can be fixed. On the other hand, as the tilt lever 8 is operated in the reverse direction, the tilt bolt 5 is shifted in the reverse direction. By this process, the clamping of the steering column 2 is released, and the steering column 2 can be tilted to a desired angle.

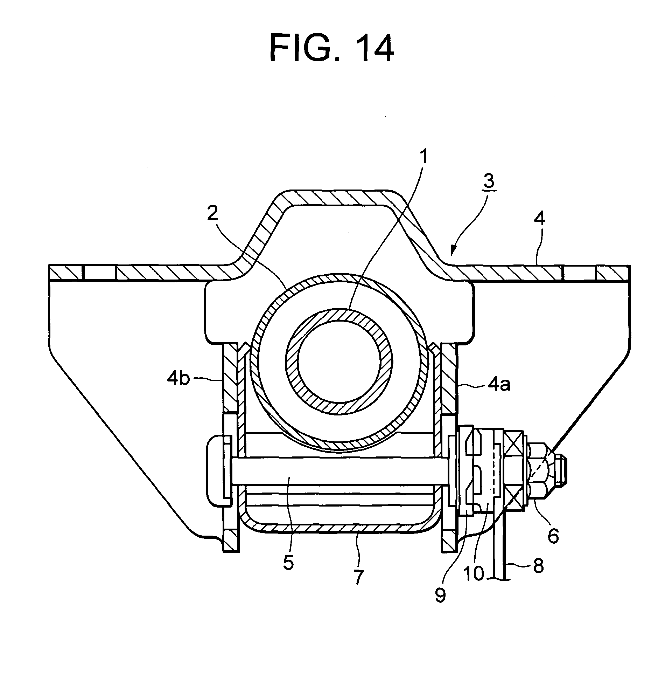

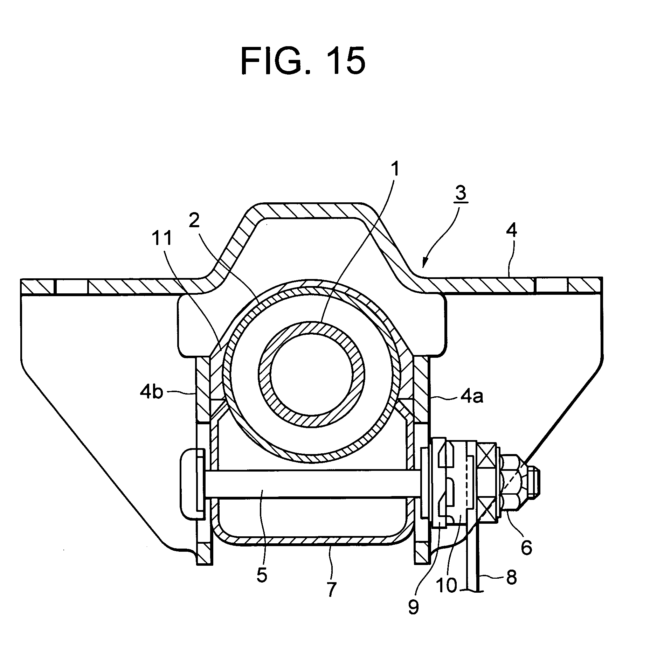

Both side walls of the distance bracket 7 are sometimes designed to extend to a position beyond the center of the steering column 2 in order to compensate lack of rigidity in supporting the steering column 2, for example as shown in Fig. 14. Another countermeasure proposed for the same purpose is to dispose a spacer 11 made of a resin between the support portions 4a and 4b of the tilt bracket 4 as shown in Fig. 15.

However, even though the intended object is attained by both the above-described methods, one of the methods in which both the side walls of the distance bracket 7 are extended is not preferable, since the increase in the size of the distance bracket 7 results in an increase in the weight. On the other hand, in the method of providing the spacer 11, an increase in the number of the parts constituting the clamp mechanism is inevitable. This entails a significant increase in the cost, and this method is not preferable either.

In view of the above, an object of the present invention is to provide a position adjustable steering column apparatus for a vehicle in which rigidity of supporting is improved without adding a special member for supporting the steering column.

### SUMMARY OF THE INVENTION

In order to attain the above object, a position adjustable steering apparatus for a vehicle according to a first aspect of the present invention comprises:
a vehicle body side bracket having a vehicle body mount portion to be mounted on a vehicle body and paired left and right opposed flat plate portions extending in the substantially vertical direction;
a steering column for rotatably supporting a steering shaft, the steering column having an expanded portion, formed by expanding a portion of a tubular material, that is to be in pressure contact with the pair of opposed flat plate portions of said vehicle body side bracket;
a shaft inserted through said pair of opposed flat plate portions and said expanded portion; and
an adjustment mechanism that acts on said shaft as an operation lever is rotated, for adjusting the distance between said pair of opposed flat plate portions,
wherein said steering column has a portion that is present in an area extending from said shaft up to at least said vehicle body mount portion and has a width substantially equal to the width of a penetrated portion of said expanded portion at which said shaft is inserted through.

A position adjustable steering apparatus for a vehicle according to a second aspect of the present invention comprises:
a vehicle body side bracket having a vehicle body mount portion to be mounted on a vehicle body and paired left and right opposed flat plate portions extending in the substantially vertical direction;
a steering column for rotatably supporting a steering shaft, the steering column having an expanded portion, formed by expanding a portion of a tubular material, that is to be in pressure contact with the pair of opposed flat plate portions of said vehicle body side bracket;
a shaft inserted through said pair of opposed flat plate portions and said expanded portion; and
an adjustment mechanism that acts on said shaft as an operation lever is rotated, for adjusting the distance between said pair of opposed flat plate portions,
wherein said steering column has a portion that is present in an area extending from said shaft up to at least said vehicle body mount portion and has a width larger than the width of a penetrated portion of said expanded portion at which said shaft is inserted through.

A position adjustable steering apparatus for a vehicle according to a third aspect of the present invention comprises:
a vehicle body side bracket having a vehicle body mount portion to be mounted on a vehicle body and paired left and right opposed flat plate portions extending in the substantially vertical direction;
a steering column for rotatably supporting a steering shaft, the steering column having a first expanded portion, formed by expanding a portion of a tubular material, that is to be in pressure contact with the pair of opposed flat plate portions of said vehicle body side bracket;
a shaft inserted through said pair of opposed flat plate portions and said first expanded portion; and
an adjustment mechanism that acts on said shaft as an operation lever is rotated, for adjusting the distance between said pair of opposed flat plate portions,
wherein said steering column has a second expanded portion expanded from a substantially center portion thereof at said vehicle body mount portion side, and
said steering column has a portion that is present in an area extending from said shaft up to at least said vehicle body mount portion and has a width substantially equal to the width of a penetrated portion of said first expanded portion at which said shaft is inserted through and the width of said second expanded portion.

A position adjustable steering apparatus for a vehicle according to a fourth aspect of the present invention comprises:
a vehicle body side bracket having a vehicle body mount portion to be mounted on a vehicle body and paired left and right opposed flat plate portions extending in the substantially vertical direction;
a steering column for rotatably supporting a steering shaft, the steering column having a first expanded portion, formed by expanding a portion of a tubular material, that is to be in pressure contact with the pair of opposed flat plate portions of said vehicle body side bracket;
a shaft inserted through said pair of opposed flat plate portions and said first expanded portion; and
an adjustment mechanism that acts on said shaft as an operation lever is rotated, for adjusting the distance between said pair of opposed flat plate portions,
wherein said steering column has a second expanded portion expanded from a substantially center portion thereof at said vehicle body mount portion side, and
said steering column has a portion that is present in an area extending from said shaft up to at least said vehicle body mount portion and has a width larger than the width of a penetrated portion of said first expanded portion at which said shaft is inserted through and the width of said second expanded portion.

### BRIEF DESCRIPTION OF THE DRAWINGS

Fig. 1A is a side view of a tilting steering apparatus for a vehicle according to a first embodiment of the present invention; Fig. 1B is a cross sectional view taken along line b-b in Fig. 1A.
Figs. 2A to 2C show portions of interest of a steering column shown in Figs. 1A and 1B; Fig. 2A is a perspective view of the steering column; Fig. 2B is a side view of the steering column; and Fig. 2C is a cross sectional view of the steering column.
Figs. 3A and 3B show a steering column according to a second embodiment of the present invention; Fig. 3A is a side view of the steering column; and Fig. 3B is a cross sectional view of the steering column.
Figs. 4A and 4B show a steering column according to a third embodiment of the present invention; Fig. 4A is a side view of the steering column; and Fig. 4B is a cross sectional view of the steering column.
Figs. 5A and 5B show a steering column according to a fourth embodiment of the present invention; Fig. 5A is a side view of the steering column; and Fig. 5B is a cross sectional view of the steering column.
Figs. 6A and 6B show a modification of the steering column according to the fourth embodiment of the present invention; Fig. 6A is a side view of the steering column; and Fig. 6B is a cross sectional view of the steering column.
Fig. 7 is a side view showing a tilting telescopic steering apparatus according to a fifth embodiment of the present invention as a whole.
Fig. 8 is a cross sectional view taken along line A-A in Fig. 7 showing only an expanded portion of the steering column.
Fig. 9A is a cross sectional view taken along line A-A in Fig. 7 showing a state in which clamping of the column is released; and Fig. 9B is a similar cross sectional view showing a state in which the column is clamped.
Fig. 10A is an enlarged side view showing a portion of interest of the steering column of a tilting steering apparatus for a vehicle according to a sixth embodiment of the present invention; and Fig. 10B is a cross sectional view taken along line b-b in Fig. 10A.
Fig. 11 is a transverse cross sectional view of a tilting steering apparatus for a vehicle according to a seventh embodiment of the present invention.
Fig. 12A is an enlarged side view showing a portion of interest of the steering column of a tilting steering apparatus for a vehicle according to the seventh embodiment of the present invention; and Fig. 12B is a cross sectional view taken along line b-b in Fig. 12A.
Fig. 13 is a cross sectional view showing a conventional steering column apparatus.
Fig. 14 is a cross sectional view showing another conventional steering column apparatus.
Fig. 15 is a cross sectional view showing a still other conventional steering column apparatus.

### EMBODIMENTS OF THE INVENTION

### (First Embodiment: Tilting Type)

The first embodiment of the present invention will be described with reference to drawings.

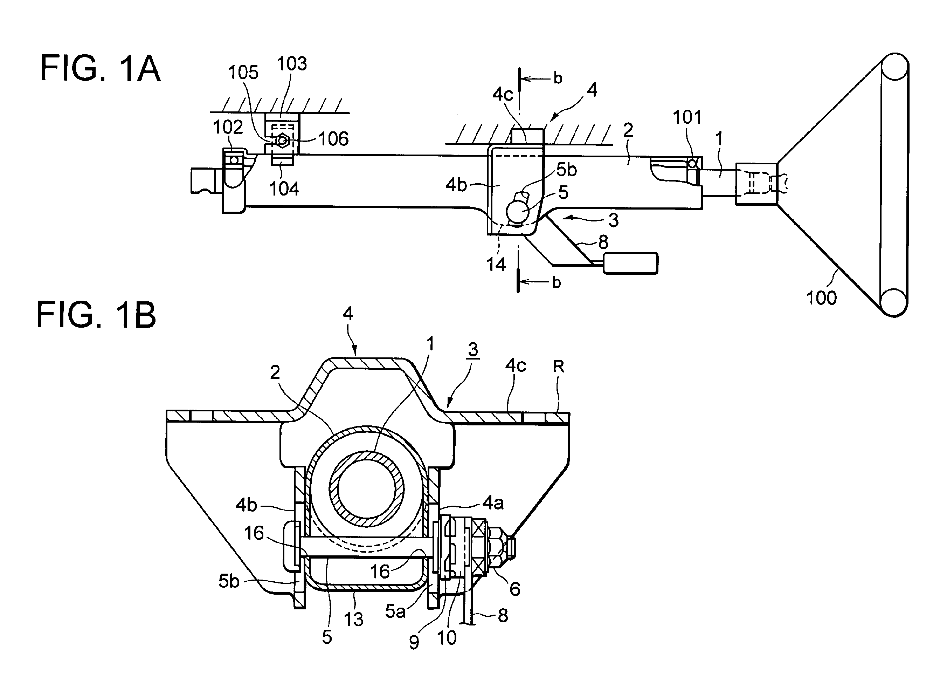

Fig. 1A is a side view showing a tilting steering apparatus for a vehicle according to the first embodiment of the present invention. Fig. 1B is a cross sectional view taken along line b-b in Fig. 1A.

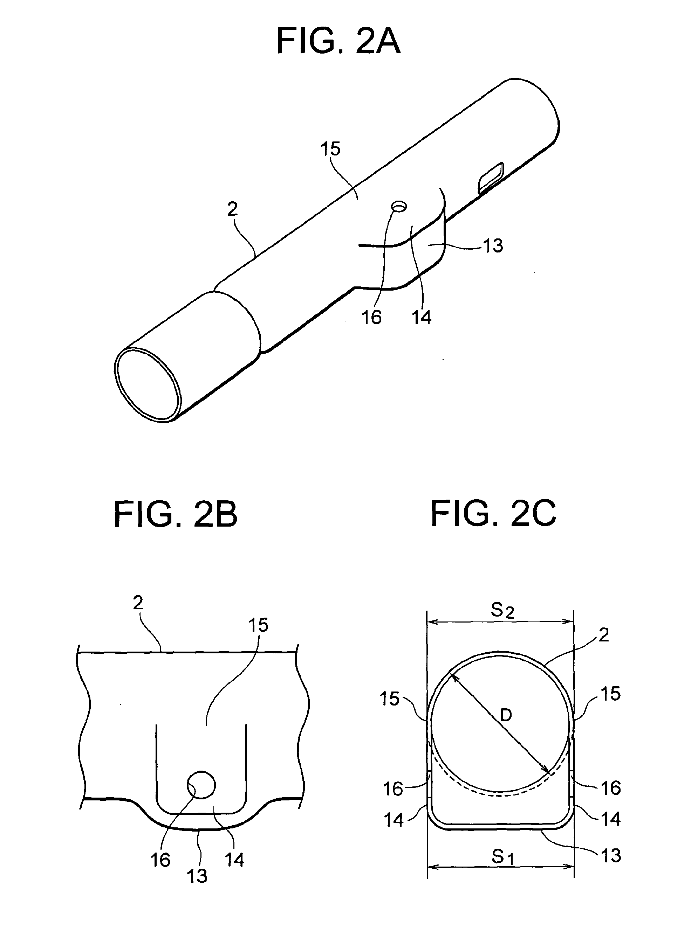

In Figs. 2A to 2C that show portions of interest of the steering column shown in Figs 1A and 1B, Fig. 2A is a perspective view of the steering column, Fig. 2B is a side view of the steering column, and Fig. 2C is a cross sectional view of the steering column.

As shown in Fig. 1A, in the interior of the steering column 2, a steering shaft 1 having a steering wheel 100 on its top is rotatably supported. The steering shaft 1 is supported on the steering column 2 by means of a rear side (with respect to the vehicle body) bearing 101 and a front side bearing 102.

The steering column 2 is attached to the vehicle body at its lower end portion by means of a vehicle body side lower bracket 103, and at its mid portion by means of a vehicle body side upper bracket 4 (or a tilt bracket) which is substantially L-shaped as seen from the side.

Inside the vehicle body side lower bracket 103 having a substantially U-shape, a column side lower bracket 104 is held. The column side lower bracket 104 may be formed integrally with the steering column 2 by a hydraulic bulge forming process, which will be described later, or alternatively it may be attached to the steering column 2 by welding.

On the vehicle body side lower bracket 103, a cut-away portion 105 that opens to the front side of the vehicle body is formed. A tilt center bolt 106 inserted through the column side lower bracket 104 is designed to engage the notch 105. With this structure, when a secondary collision occurs, the steering column 2 can be disengaged, together with the column side lower bracket 104, from the vehicle body side lower bracket 103 to move frontward with respect to the vehicle body.

The tilting steering column apparatus is equipped with a steering column 2 that supports the steering shaft 1 along its axis by means of bearings (not shown) and a clamp mechanism 3 attached to an expanded portion 13 of the steering column 2, which will be described in detail later. The clamp mechanism 3 comprises a tilt bracket 4, a tilt bolt 5, a nut 6, a tilt lever 8 and paired fixed and movable cams 9 and 10. The steering column 2 is set at the center of the tilt bracket 4 that is fixed to the vehicle body.

The tilt bracket (the vehicle body side bracket) 4 is integrally composed of a pair of opposed flat plate portions 4a, 4b extending in the axial direction on both sides of the steering column 2 and a vehicle body mount portion 4c that is fixed to the vehicle body and extending in the transverse direction of the steering column 2. Alternatively, the pair of opposed flat portions 4a, 4b and the vehicle body mount portion 4c may be separate members. The vehicle body side upper bracket (the tilt bracket) 4 is designed in such a way that upon secondary collision, it moves frontward with respect to the vehicle body with the pair of opposed flat plate portions 4a, 4b being bent frontward relative to the vehicle body mount portion 4c by an impact energy imparted on the tilt bolt 5 while generating a collapse load to absorb the impact energy. Instead of the above-described structure, the upper bracket 4 may be separated into a vehicle body side bracket and a column side bracket and a resin capsule or the like may be provided between those brackets so that the column side bracket can be disengaged upon secondary collision.

The tilt bolt 5 (a shaft) is inserted through a pair of long holes 5a, 5b for allowing tilt adjustment formed on the opposed flat plate portions 4a, 4b of the tilt bracket 4, circular holes 16, 16 formed on the expanded portion 13 of the steering column 2, the tilt lever 8, the fixed cam 9 and the movable cam 10. The nut 6 is screwed on a threaded portion at one end of the tilt bolt 5. The paired fixed cam 9 and movable cam 10 are designed to engage the long hole 5a for allowing tilt adjustment on the opposed flat plate portion 4a of the tilt bracket 4 and the tilt lever 8 respectively.

As the tilt lever 8 is rotated, the movable cam 10 is rotated relative to the fixed cam 9 that is always non-rotatable, whereby the tilt bolt 5 (or the shaft) is pulled in its axial direction to change the distance between the pair of opposed flat plate portions 4a and 4b.

As shown in Fig. 2A, the steering column 2 has the expanded portion 13 that was formed by expanding (or bulging) a portion of a tubular material at an axially mid portion of the column by a hydraulic bulge forming process.

As shown in Figs. 2B and 2C, the expanded portion 13 has a pair of flat portions 14, opposed to the opposed flat plate portions 4a and 4b respectively, serving the clamp mechanism and transition portions 15 through which the tubular material changes into the flat portions 14.

The flat portions 14 maintain a horizontal span S1, and the transition portions 15 are formed with a horizontal span S2 that is substantially equal to the span S1. The span S1 refers to the span of the portions at which the circular holes 16 are formed.

As per the above, this embodiment is characterized by the condition S1≒S2.

Letting D be the diameter of the steering column, although in the illustrated example (shown in Figs. 2A to 2C) the condition S2≒D is met, this condition is not essential, but the apparatus may satisfy the condition S2≠D.

On the flat portions 14, through holes such as circular holes 16 for example, through which the tilt bolt 5 is inserted are formed by hydraulic bulge forming process.

The transition portions 15 formed with the same span as the flat portions 14 are located, with respect to the vertical direction, at a certain position between the circular holes 16 and the vehicle body mount portion 4c. Since the flat portions 14 and the transition portion 15 are formed by expanding a portion of the same member, they have the substantially the same thickness. This is also the case with the other embodiments that will be described later.

In this embodiment, as the tilt lever 8 is rotated in the tilting operation, the movable cam 10 engaging the tilt lever 8 is displaced relative to the fixed cam 9. In that process, the tilt bolt (or the shaft) 5 is pulled in its axial direction, so that each of the opposed flat plate portions 4a, 4b of the tilt bracket 4 shifts inwardly to clamp the expanded portion 13 of the steering column 2 from the outside.

In this clamping process, the tilt bracket 4 and the steering column 2 can be pressed together with a strong tightening force in the transition portions 15 as well as in the flat portions 14 at which the clamp mechanism is present. In other words, with the provision of the flat portions 14 and the transition portions 15 having substantially the same horizontal span S1, S2, when the tilt bracket 4 is in contact with the flat portions 14 and the transition portions 15, these portions are in uniform, close contact with the opposed flat plate portions 4a and 4b, so that a uniform tightening force is produced. Consequently, the tilt bracket 4 and the steering column 2 can be pressed together with a strong tightening force also in transition portions 15 as well as in the flat portions 14.

The expanded portion 13 in this embodiment is formed by expanding a portion of the material of the steering column 2, and a large size distance bracket extending beyond the center of the steering column 2 is not used. Therefore, the weight of the steering column apparatus is not increased. Furthermore, since a special member such as a spacer made of a resin is not used, the structure of the clamp mechanism can be made simple and the steering column apparatus can be manufactured at low cost with a decreased number of parts.

As per the above, in this embodiment, when the steering column 2 is held between the opposed flat plate portions 4a and 4b of the tilt bracket 4, the steering column 2 can be brought into pressure contact with the opposed flat plate portions 4a and 4b with a strong tightening force also in the transition portions 15 as well as in the flat portions 14. Thus, it is possible to improve rigidity in supporting the steering column 2 without providing a special member.

As described before, this embodiment is characterized by the condition S1≒S2. Although the condition S2≒D (D is the outer diameter of the steering column) is met in the illustrated example (Figs. 2A to 2C), this condition is not essential, but the apparatus may satisfy the condition S2≠D.

### (Second Embodiment: Telescopic Type)

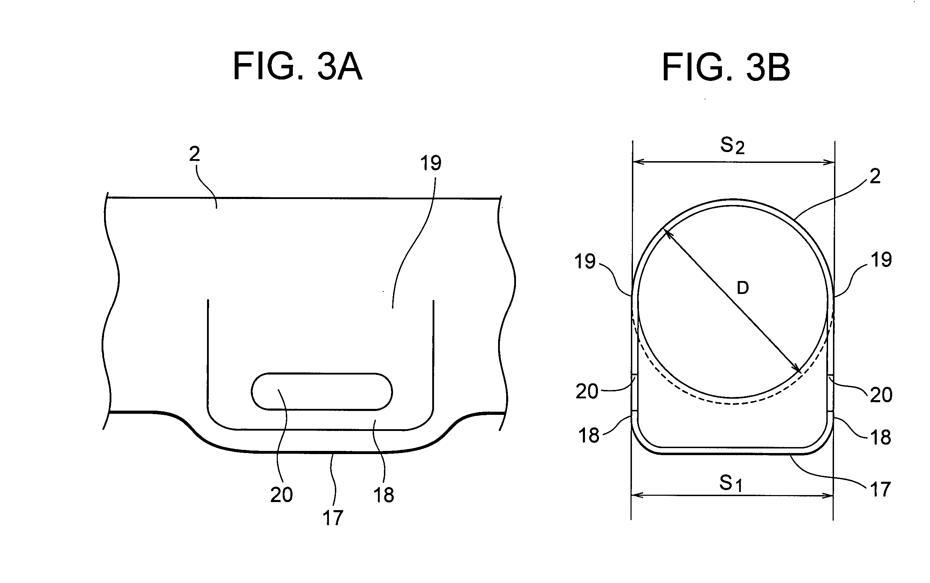

In the following, the second embodiment of the present invention will be described with reference to Figs. 3A and 3B. Figs. 3A and 3B show a steering column apparatus according to the second embodiment of the present invention. Fig. 3A is a side view of the steering column and Fig. 3B is a cross sectional view of the steering column.

The steering column of the second embodiment is telescopic type unlike the above-described first embodiment, but the structure shown in Figs. 1A and 1B (i.e. the structure and positional relationship of the clamp mechanism 3, the vehicle body side bracket 4 and the shaft 5 etc.) also applies to the steering column of the second embodiment.

The steering column shown in Figs. 3A and 3B can be used in a telescopic apparatus or a tilting, telescopic steering apparatus.

As shown in Fig. 3A and 3B, the steering column 2 has an expanded portion 17 formed by expanding (or bulging) a portion of a tubular material at an axially mid portion of the column by a hydraulic bulge forming process.

The expanded portion 17 has a pair of flat portions 18 respectively opposed to the opposed flat plate portions 4a and 4b shown in Figs. 1A and 1B and transition portions 19 through which the tubular material changes into the flat portions 18.

The flat portions 18 maintain a horizontal span S1, and the transition portions 19 are formed with a horizontal span S2 that is substantially equal to the span S1. The span S1 refers to the span of the portion at which long holes 20 are formed.

As per the above, this embodiment is characterized by the condition S1≒S2.

Letting D be the diameter of the steering column, although in the illustrated example (shown in Figs. 2A to 2C) the condition S2≒D is met, this condition is not essential, but the apparatus may satisfy the condition S2≠D.

On the flat portions 18, through holes such as long holes 20 for example, through which a tightening bolt (not shown) is inserted are formed.

The transition portions 19 formed with the same span as the flat portions 18 are located, with respect to the vertical direction, at a certain position between the long holes 20 and the vehicle body mount portion 4c.

In this embodiment, pressure contact with the tilt bracket 4 can be attained also in the transition portions 19 as well as in the flat portions 18. In other words, with the provision of the flat portions 18 and the transition portions 19 having substantially the same horizontal span S1, S2, when the opposed flat plate portions 4a, 4b are in contact with the flat portions 18 and the transition portions 19, these portions are in uniform, close contact with the opposed flat plate portions 4a and 4b, so that a uniform tightening force is produced. Consequently, pressure contact with the opposed flat plate portions 4a, 4b with a strong tightening force is realized also in transition portions 19 as well as in the flat portions 18.

In this embodiment, when the telescopic steering column 2 is held by the bracket, the steering column 2 can be brought into pressure contact with the opposed flat plate portions 4a and 4b with a strong tightening force also in the transition portions 19 as well as in the flat portions 18. Thus, it is possible to improve rigidity in supporting the steering column 2 without providing a special member.

As described before, this embodiment is characterized by the condition S1≒S2. Although the condition S2≒D (D is the outer diameter of the steering column) is met in the illustrated example (Figs. 2A to 2C), this condition is not essential, but the apparatus may satisfy the condition S2≠D.

### (Third Embodiment: Tilting Type)

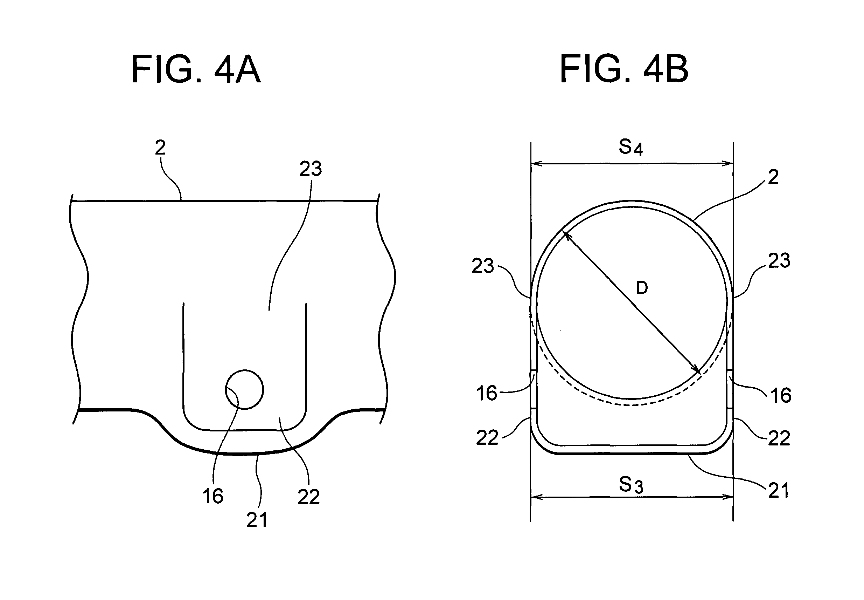

In the following, the third embodiment of the present invention will be described with reference to Figs. 4A and 4B. Figs. 4A and 4B show a steering column according to the third embodiment of the present invention. Fig. 4A is a side view of the steering column and Fig. 4B is a cross sectional view of the steering column.

The steering column of the third embodiment is of a tilting type as with the above-described first embodiment, and the structure shown in Figs. 1A and 1B (i.e. the structure and the positional relationship of the clamp mechanism 3, the vehicle body side bracket 4 and the shaft 5 etc.) also applies to the steering column of the third embodiment.

The steering column shown in Figs. 4A and 4B can be used in a tilting steering apparatus.

As shown in Figs. 4A and 4B, the tilting steering column 2 has an expanded portion 21 that was formed by expanding (or bulging) a portion of a tubular material at an axially mid portion of the column by a hydraulic bulge forming process.

The expanded portion 21 has a pair of flat portions 22 respectively opposed to the opposed flat plate portions 4a and 4b shown in Fig. 1B and a pair of transition portions 23.

The transition portions 23 maintain a horizontal span S4 substantially equal to the diameter D of the steering column 2, and the flat portions 22 are formed with a horizontal span S3 that is slightly smaller than the span S4. The span S3 refers to the span of the portions at which circular holes 16 are formed.

In spite of the above statement that the diameter D and the span S4 are substantially equal to each other, this condition is not essential, but the apparatus may satisfy the condition D<S4 or D>S4.

In connection with the above, S3 and S4 are connected by a slope, namely they are on the same plane.

In the flat portions 22, the circular holes 16 through which a tightening bolt (not shown) is inserted are formed.

The transition portions 23 formed with the span S4 different from that of the flat portions 22 are located, with respect to the vertical direction, at a certain position between the circular holes 16 and the vehicle body mount portion 4c.

In this embodiment, more reliable pressure contact with the opposed flat plate portions 4a and 4b is realized especially by the transition portions 23 having the span S4 larger than the span S3 of the flat portions 22. Accordingly, even if an offset is present between the center of the clamp mechanism 3 and the transition portions 23, the tightening force of the clamp mechanism 3 can be exerted on both the flat portions 22 and the transition portions 23 uniformly.

As per the above, when the steering column 2 is held between the opposed flat plate portions 4a and 4b, the members can be pressed together by the transition portions 23 with a strong tightening force. Consequently, a high rigidity can be attained in supporting the steering column 2.

In this embodiment, when the steering column 2 is held between the opposed flat plate portions 4a and 4b, the steering column 2 can be brought into pressure contact with the opposed flat plate portions 4a and 4b with a strong tightening force in the transition portions 23 having the span S4 larger than the span S3 of the flat portions 22. Thus, it is possible to enhance rigidity in supporting the steering column 2 without providing a special member.

Although it was described in the above that the diameter D and the span S4 are substantially equal to each other, this condition is not essential, but the apparatus may satisfy the condition D<S4 or D>S4.

### (Fourth Embodiment: Tilting Type)

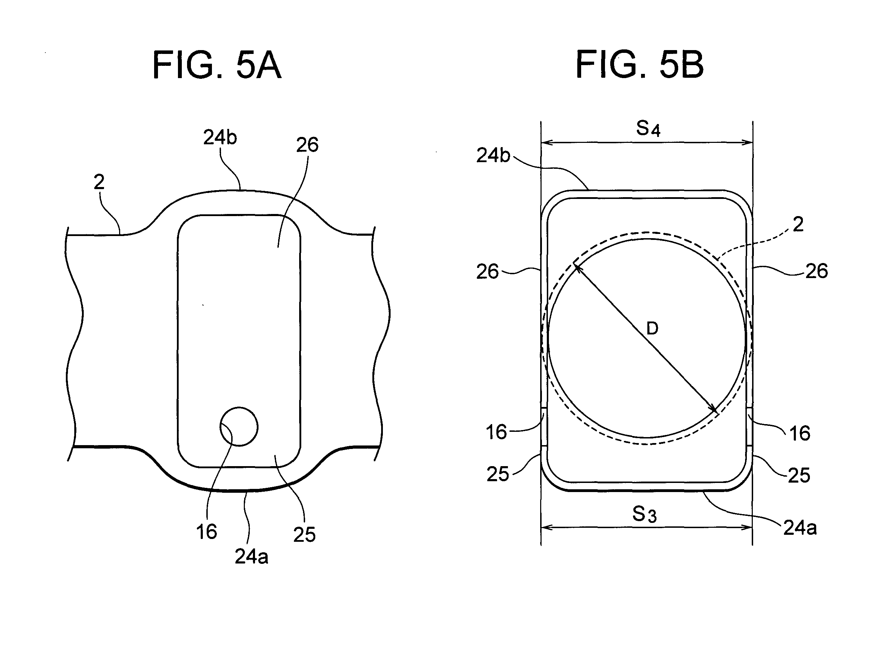

In the following, the fourth embodiment of the present invention will be described with reference to Figs. 5A and 5B. Figs. 5A and 5B show a steering column according to the fourth embodiment of the present invention. Fig. 5A is a side view of the steering column and Fig. 5B is a cross sectional view of the steering column.

The steering column of the fourth embodiment is of a tilting type as with the above-described first embodiment, and the structure shown in Figs. 1A and 1B (i.e. the structure and the positional relationship of the clamp mechanism 3, the vehicle body side bracket 4 and the shaft 5 etc.) also applies to the steering column of the fourth embodiment.

The steering column shown in Figs. 5A and 5B can be used in a tilting steering apparatus.

The tilting steering column 2 has paired first and second expanded portions 24a and 24b formed by expanding (or bulging) a portion of tubular material upwardly and downwardly at an axially mid portion of the column by a hydraulic bulge forming process.

The first expanded portion 24a has a pair of first flat portions 25, 25 opposed to the opposed flat plate portions 4a, 4b shown in Figs. 1A and 1B. The second expanded portion 24b has a pair of second flat portions 26, 26 located between circular holes 16 and the vehicle body mount portion 4c.

The first flat portions 25 are formed with a horizontal span S3 and the second flat portions 26 are formed with a horizontal span S4 equal to or slightly larger than the span S3. The span S3 refers to the span of the portions at which the circular holes 16 are formed.

As per the above, this embodiment is characterized by the condition S4≥S3.

In addition, in this embodiment, either S3 or S4 is equal to D. However, this condition is not essential, but the apparatus may satisfy the condition (S3, S4)>D or the condition (S3, S4)<D.

Furthermore, the first flat portion 25 and the second flat portion 26 may be coplanar.

In this embodiment, more reliable pressure contact with the opposed flat plate portions 4a and 4b is realized by the second flat portions 26 having the span S4 equal to or larger than the span S3 of the first flat portions 25. Accordingly, even if offset is present between the center of the clamp mechanism and the second flat portions 26, the tightening force of the clamp mechanism can be exerted on both the first flat portions 25 and the second flat portions 26 uniformly.

Thus, when the steering column 2 is held between the opposed flat plate portions 4a and 4b, the members can be pressed together in the second flat portions 26 with a strong tightening force. Consequently, a high rigidity can be attained in supporting the steering column.

### (Modification of the Fourth Embodiment)

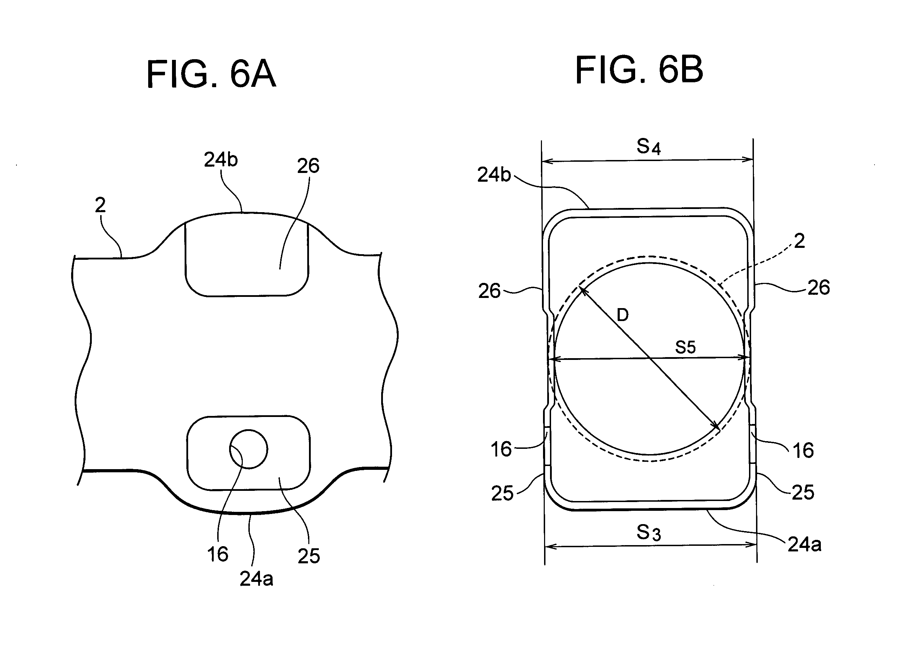

The above-described embodiment may be modified in such a way that the first flat portions 25 and the second flat portions 26 (located between the circular holes 16 and the vehicle body mount portion 4c) have horizontal spans S3 and S4 significantly larger than the outer diameter D of the steering column 2, as shown in Figs. 6A and 6B.

The first flat portions 25 are formed with a horizontal span S3 and the second flat portions 26 are formed with a horizontal span S4 equal to or slightly larger than the span S4. The span S3 refers to the span of the portions at which the circular holes 16 are formed.

As per the above, this modification is characterized by the condition S4≥S3.

In addition, the condition S4>S5 and the condition S3>S5 are met in this modification.

Furthermore, in this modification, S5 is equal to D. However, this condition is not essential, but the condition S5>D or S5<D may be met.

The first flat portion 25 and the second flat portion 26 may be coplanar.

In this embodiment, when the tilting steering column 2 is held between the opposed flat plate portions 4a and 4b, more reliable pressure contact with the opposed flat plate portions 4a, 4b is realized in the second flat portions 26 having the span S4 equal to or larger than the span S3 of the first flat portions 25. Therefore, it is possible to enhance rigidity in supporting the steering column 2 without providing a special member.

### (Fifth Embodiment: Tilt Telescopic Type)

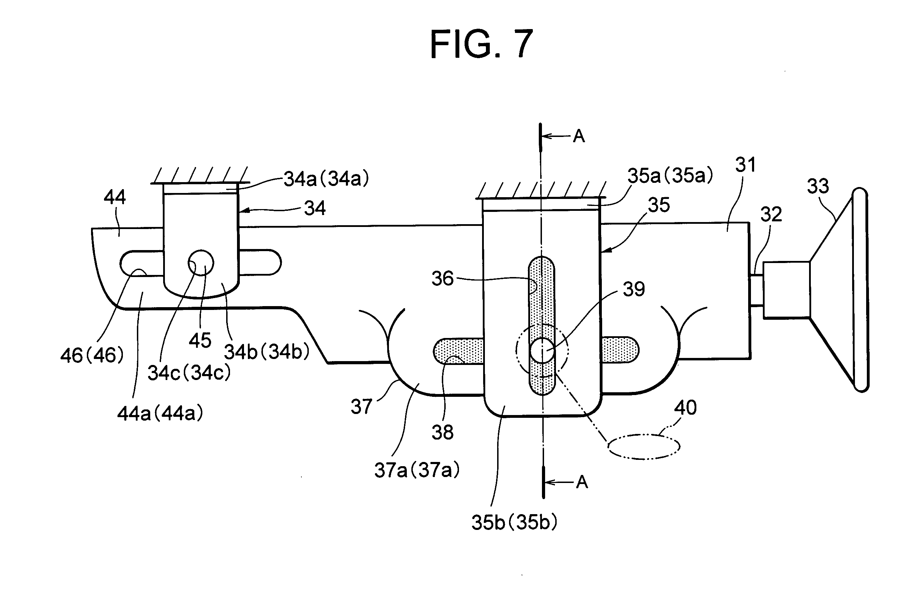

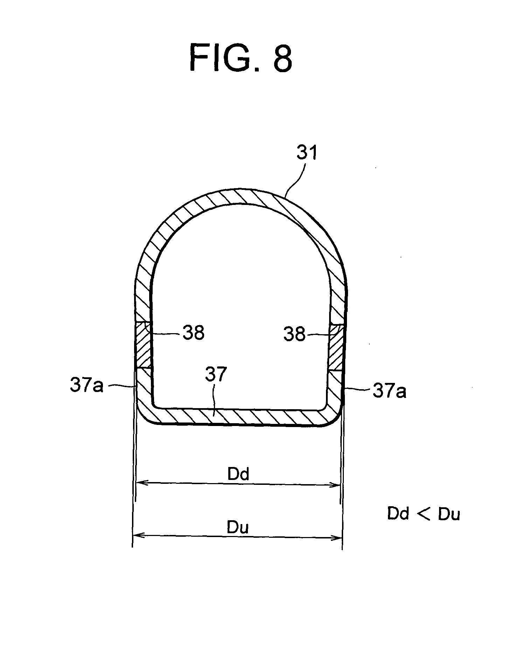

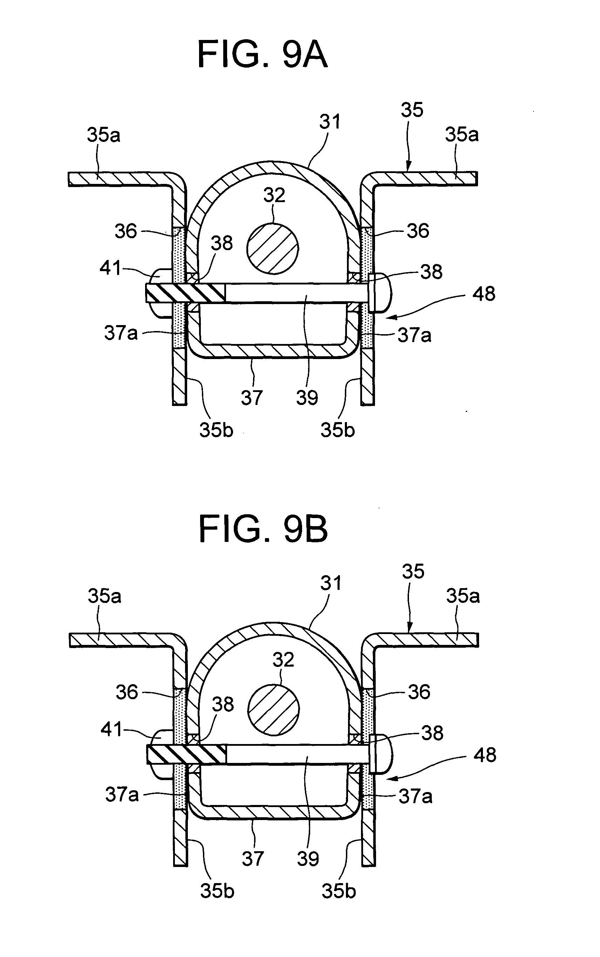

Fig. 7 is a side view showing a tilting telescopic steering apparatus for a vehicle according to the fifth embodiment of the present invention. Fig. 8 is a cross sectional view taken along line A-A in Fig. 7, showing only the expanded portion of the steering column. Fig. 9A is a cross sectional view taken along line A-A in Fig. 7, showing a state in which clamping of the column is released. Fig. 9B is a similar cross sectional showing a state in which the column is clamped.

In the tilting telescopic steering apparatus affording to the fifth embodiment of the present invention shown in Figs. 7, 8, 9A and 9B, a steering shaft 32 is rotatably supported on a steering column 31, and a steering wheel 33 is attached on the rear end (with respect to the vehicle body) of the steering shaft 32.

The central portion of the steering column 31 is supported on a vehicle body mount upper bracket 35 in a swingable way. The vehicle body mount upper bracket 35 is fixed to the vehicle body. The vehicle body mount upper bracket 35 has a pair of horizontal portions 35a, 35a (vehicle body mount portions) extending transversely to the steering column 31 and a pair of opposed flat plate portions 35b, 35b that are integral with the pair of horizontal portions 35a, 35a and extended downward from them to extend in the axial direction on both sides of the steering column 31. On the pair of opposed flat plate portions 35b, 35b, a pair of long holes 36, 36 for allowing tilt adjustment are formed.

The pair of horizontal portions 35a, 35a and the pair of opposed flat plate portions 35b, 35b may be formed as separate members.

An expanded portion 37 is formed at the axially central portion of the steering column 31 by a hydroforming process. In the expanded portion 37 integrally formed on the steering column 31, both side portions 37a, 37a that are in contact with the opposed flat plate portions 35b, 35b of the vehicle body mount upper bracket 35 respectively so as to be supported by the vehicle body mount upper bracket 35 are integrally formed. On both the side portions 37a, 37a, a pair of long holes 38, 38 for allowing tilt adjustment are formed. A tightening bolt 39 provided with a clamp mechanism 48 is inserted through the pair of tilt adjustment long holes 36, 36 and the pair of column position adjustment long holes 38, 38. An operation lever 40 is rotatably mounted on the tightening bolt 39. The clamp mechanism 48 may be a well known mechanism including a cam mechanism.

The lower, front (with respect to the vehicle body) portion of the steering column 31 is supported by a vehicle body mount lower bracket 34 in a swingable way. The vehicle body mount lower bracket 34 is fixed to the vehicle body. The vehicle body mount lower bracket 34 has a pair of horizontal portions 34a, 34a extending transversely to the steering column 31 and a pair of opposed flat plate portions 34b, 34b that are integral with the pair of horizontal portions 34a, 34a and extended downward from them to extend in the axial direction on both sides of the steering column 31. On the pair of opposed flat plate portions 34b, 34b, a pair of bracket supporting holes 34c, 34c are formed.

At the lower, front (with respect to the vehicle body) end of the steering column 31, a support bracket portion 44 is attached by, for example, welding. The support bracket portion 44 has both side portions 44a, 44a that are in contact with the opposed flat plate portions 34b, 34b of the vehicle body mount lower bracket 34 respectively so as to be supported. A pair of long holes 46, 46 for allowing column position adjustment are formed on both the side portions 44a, 44a. The support bracket portion 44 is supported by the vehicle body mount bracket 34 in a slidable and rotatable manner by means of the long holes 46, 46 and the bracket supporting holes 34c, 34c and hinge pins 45, 45. The tilting telescopic steering apparatus has the above-described structure.

The support bracket portion 44 is formed integrally with the steering column 31 by a hydroforming process that will be described later. Alternatively, the supporting bracket portion 44 and the steering column 31 may be formed as separate members.

In the tilting telescopic steering apparatus having the above-described structure, when the tilt and telescopic position is to be fixed after adjustment (in the column position adjustment), the operation lever 40 is rotated in the tightening direction. By that operation, the distance between the head of the tightening bolt 39 and an adjustment nut 41 is decreased, so that the pair of opposed flat plate portions 35b, 35b of the vehicle body mount upper bracket 35 are securely pressed against both the side portions 37a, 37a of the expanded portion 37 of the steering column 31. Thus, the tilt and telescopic adjusted position of the steering column 31 is fixed.

On the other hand, when the tilt and telescopic position is to be adjusted, the operation lever is rotated in the releasing direction. By that operation, the distance between the head of the tightening bolt 39 and the adjustment nut 41 is increased, so that secure pressure contact of the pair of opposed flat plate portions 35b, 35b of the vehicle body mount upper bracket 35 and both the side portions 37a, 37a of the expanded portion 37 of the steering column 31 is released. Thus, adjustment of the tilt and telescopic position of the steering column 31 is allowed. With the above-described process, the steering column 31 can be adjusted to a desired tilt and telescopic position.

As shown in Fig. 8, in this embodiment, a single blank in the form of a steel tube material is formed into a steering column 31 having an integral expanded portion 37 by a hydroforming process. On both the side portions 37a, 37a of the expanded portion 37, the pair of long holes 38, 38 for allowing column position adjustment through which the tightening bolt 39 provided with the clamp mechanism 48 is inserted are formed. The clamp mechanism 48 may include the cam mechanism used in the first embodiment.

In this embodiment, both the side portions 37a, 37a of the expanded portion 37 are slanted in such a way that the distance (Dd) therebetween at the lower end is slightly smaller than the distance (Du) therebetween at the upper end. The distance Du is the span of the portions at which the long holes 38 for allowing column position adjustment are formed.

Therefore, the contact area of those members can be increased and the force for securing the steering column 31 on the vehicle body can be increased. This leads to improvement in rigidity against vibration and an increase in the securing force upon collision.

The hydroforming is a method of placing a thin-walled steel pipe in a metallic mold and filling the interior of the steel pipe with pressurized water or pressurized oil to expand the steel pipe to shape it into a desired form or simply filling the interior of the pipe with rubber or the like to expand it. This method is advantageous over the process of forming a member having a closed cross sectional structure by welding after press molding, since the product will not be much deformed by heat thanks to the lack of a welded portion and therefore processing or manufacturing cost reduction and weight reduction can be expected.

As per the above, in this embodiment, since the expanded portion 7 has a closed cross sectional structure integral with the steering column 31, the steering column 31 itself can be made rigid and the force for securing the steering column 31 to the vehicle body can be made strong. In addition, the manufacturing cost (including the material cost, processing cost and assembling cost) and the weight can be reduced.

Although the description of this embodiment of the present invention has been made with reference to the case in which the steering column is produced by a hydroforming process, the production method is not limited to the hydroforming process, but the steering column may be formed by a rubber bulge forming process, an explosion bulge forming process or a pressing process.

In this embodiment, the condition Dd<Du is met. In addition, letting D be the diameter of the steering column 2 (not shown), the condition Du≒D is met. However, this condition is not essential, but the condition Du≠D may be met.

### (Sixth Embodiment: Tilting Type)

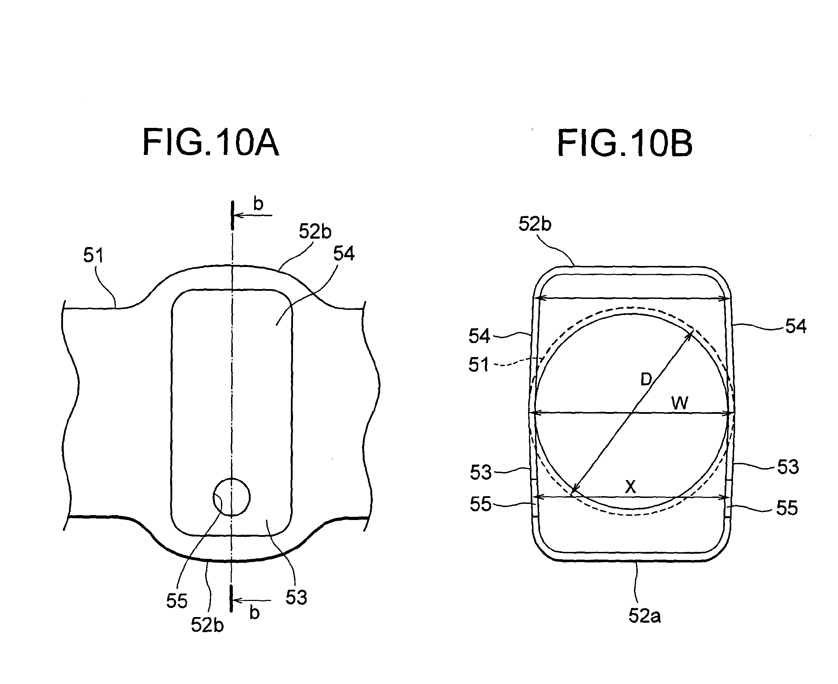

Fig. 10A is an enlarged side view showing a portion of interest of a steering column of a tilting steering apparatus for a vehicle according to the sixth embodiment of the present invention. Fig. 10B is a cross sectional view taken along line b-b in Fig. 10A.

The steering column in the sixth embodiment is of a tilting type as with the above-described first embodiment, and the structure shown in Figs. 1A and 1B (i.e. the structure and positional relationship of the clamp mechanism 3, the vehicle body side bracket 4, and the shaft 5 etc.) also applies to the steering column according to the sixth embodiment.

The steering column shown in Figs. 10A and 10B can be used in a tilting steering apparatus.

The tilting steering column 51 has paired first and second expanded portions 52a and 52b formed by expanding (or bulging) a portion of tubular material upwardly and downwardly at a certain position in the axial direction of the column by a hydraulic bulge forming process.

The first expanded portion 52a has a pair of first flat portions 53, 53 opposed to the opposed flat plate portions 4a, 4b shown in Figs. 1A and 1B. The second expanded portion 52b has a pair of second flat portions 54, 54 located between circular holes 55 and the vehicle body mount portion 4c.

The first flat portions 53 have a horizontal span X that is smaller than the horizontal span W of transition portions between the first and second flat portions 53 and 54. In other words, the condition W≥X is met. The span X refers to the span of the portions at which circular holes 55 are formed.

The second flat portions 54 have a horizontal span Y that is smaller than the span W. In other words, the condition W≥Y is met. The span Y refers to the span of the upper portions of the second flat portions 54.

Whether Y>X or Y<X does not matter, so long as the conditions W≥X and W≥Y are met.

In addition, no conditions are placed on the relationship between X and Y and the relationship between W and D, so long as the conditions W≥X and W≥ Y are met.

As per the above, since those portions are so formed as to satisfy the conditions W≥X and W≥Y, when the steering column 2 is held between the opposed flat plate portions 4a, 4b, the members can be pressed together in the first and second flat portions 53 and 54 with a strong tightening force, as is the case with the above-described embodiments. Consequently, a high rigidity can be attained in supporting the steering column 2.

### (Seventh Embodiment: Tilting Type)

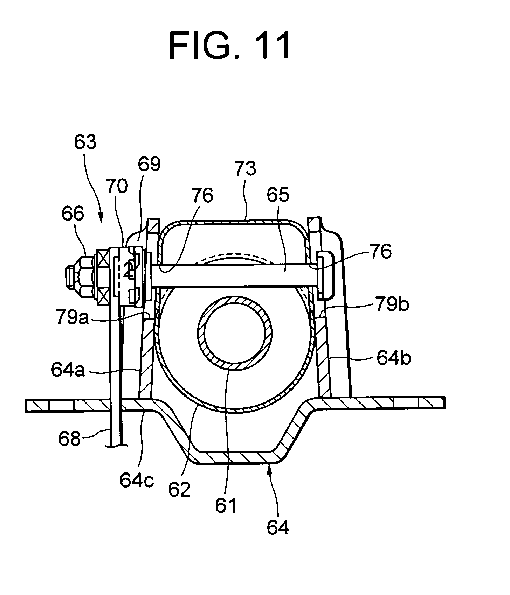

Fig. 11 is a transverse cross sectional view of a tilting steering apparatus for a vehicle according to the seventh embodiment of the present invention.

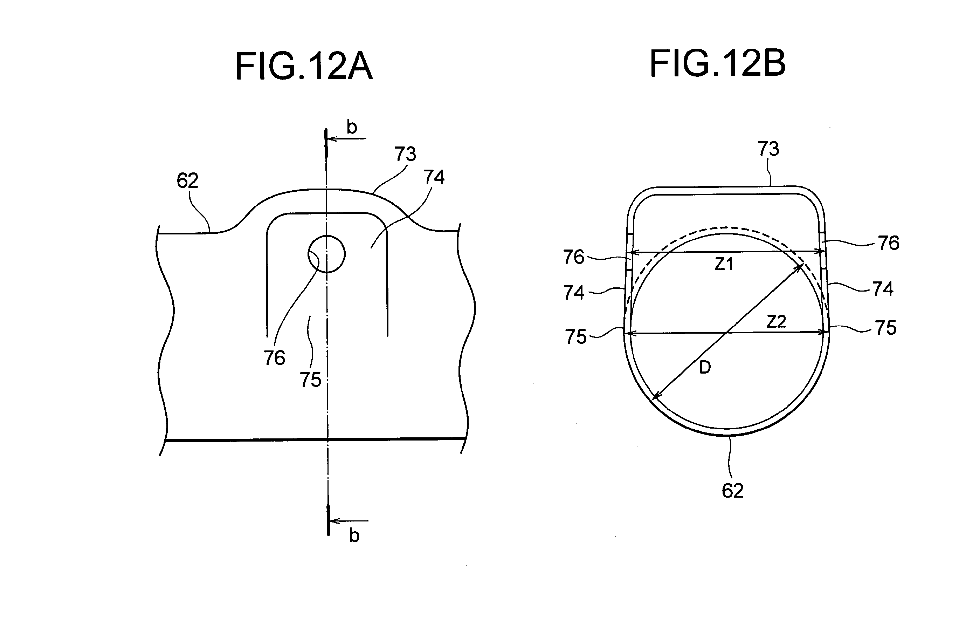

Fig. 12A is an enlarged side view showing a portion of interest of the steering column of the tilting steering apparatus for a vehicle according to the seventh embodiment of the present invention. Fig. 12B is a cross sectional view taken along line b-b in Fig. 12A.

As shown in Fig. 11, the tilting steering column apparatus has a steering column 62 for supporting a steering shaft 61 along its axis via a bearing (not shown) and a clamp mechanism 63 attached to an expanded portion 73 of the steering column 62.

The clamp mechanism 63 comprises a tilt bracket 64, a tilt bolt (a shaft) 65, a nut 66, a tilt lever 68 and paired fixed and movable cams 69 and 70.

The tilt bracket 64 (i.e. the vehicle body side bracket) is integrally composed of a pair of opposed flat plate portions 64a, 64b extending axially on both sides of the steering column and a vehicle body mount portion 64c extending transversely to the steering column 61. Alternatively, the pair of opposed flat plate portions 64a, 64b and the vehicle body mount portion 64c may be formed as separate members. On the pair of opposed flat plate portions 64a and 64b, long holes 79a and 79b for allowing tilt adjustment are formed respectively.

In this embodiment, the vehicle body mount portion 64c is disposed below the center axis of the steering column 62, and the pair of opposed flat plate portions 64a, 64b extend substantially upwardly from the vehicle body mount portion 64c.

The tilt bolt (shaft) 65 is inserted through the opposed flat plate portions 64a, 64b of the tilt bracket 64, an expanded portion of the steering column 62, the tilt lever 68, the fixed cam 69 and the movable cam 70. The nut 66 is screwed on a threaded portion at one end of the tilt bolt 65. The paired fixed and movable cams 69 and 70 engage the flat plate portion 64a and the tilt lever 68 respectively.

Thus, as the tilt lever 68 is rotated, the movable cam 70 rotates relative to the fixed cam 69, which is always non-rotatable, whereby the tilt bolt (shaft) 65 is pulled in its axial direction, so that the distance between the pair of opposed flat plate portions 64a and 64b is changed.

As shown in Figs. 12A and 12B, the steering column 62 has an expanded portion 73 formed by expanding (or bulging) a portion of a tubular material at an axially mid portion of the column by a hydraulic bulge forming process.

The expanded portion 73 has a pair of flat portions 74 opposed to the opposed flat plate portions 64a and 64b respectively for serving the clamp mechanism 63 and transition portions 75 through which the tubular material changes into the flat portions 74.

The flat portions 74 have a span Z1 that is smaller than the span Z2 of the transition portions 75. In other words the condition Z2>Z1 is met. The span Z1 refers to the span of the portions at which circular holes 76 are formed.

Although the relationship between Z2 and D is Z2 ≒D, Z2 and D may be of any relationship.

On the flat portions 74, through holes, or the circular holes 76 for example, through which the tilt bolt (or the shaft) is inserted are formed by hydraulic bulge forming process.

In this embodiment, as the tilt lever 68 is rotated in the tilting operation, the movable cam 70 engaging the tilt lever 68 is displaced relative to the fixed cam 69. In that process, the tilt bolt (shaft) 65 is pulled in its axial direction, so that each of the opposed flat plate portions 64a, 64b of the tilt bracket 64 shifts inwardly to clamp the expanded portion 73 of the steering column 62 from the outside.

In this clamping process, the tilt bracket 64 and the steering column 62 can be pressed together with a strong tightening force in the transition portions 75 as well as in the flat portions 74 at which the clamp mechanism is present.

As per the above, in this embodiment, when the steering column 62 is held between the opposed flat plate portions 64a and 64b of the tilt bracket 64, the steering column 62 can be brought into pressure contact with the opposed flat plate portions 64a and 64b with a strong tightening force also in the transition portions 75 as well as in the flat portions 74. Thus, it is possible to improve rigidity in supporting the steering column 62 without providing a special member.

The present invention is not limited to the embodiments described above, but various modifications can be made. For example, the position adjustable steering column apparatus for a vehicle according to the present invention may be any of the tilting, telescopic and tilting-telescopic types.

As has been described in the foregoing, according to the present invention, it is possible to enhance rigidity in supporting the steering column without adding a special member. In addition, it is possible to provide a steering apparatus for a vehicle in which the force for securing the steering column on the vehicle body is enhanced, by increasing the contact area between an expanded portion integrally formed on the steering column and opposed flat plate portions of a vehicle body mount bracket.

## Claims

1. A position adjustable steering apparatus for a vehicle comprising:
a vehicle body side bracket having a vehicle body mount portion to be mounted on a vehicle body and paired left and right opposed flat plate portions extending in the substantially vertical direction;
a steering column for rotatably supporting a steering shaft, the steering column having an expanded portion, formed by expanding a portion of a tubular material, that is to be in pressure contact with the pair of opposed flat plate portions of said vehicle body side bracket;
a shaft inserted through said pair of opposed flat plate portions and said expanded portion; and
an adjustment mechanism that acts on said shaft as an operation lever is rotated, for adjusting the distance between said pair of opposed flat plate portions,
wherein said steering column has a portion that is present in an area extending from said shaft up to at least said vehicle body mount portion and has a width substantially equal to the width of a penetrated portion of said expanded portion at which said shaft is inserted through.

2. A position adjustable steering apparatus for a vehicle comprising:
a vehicle body side bracket having a vehicle body mount portion to be mounted on a vehicle body and paired left and right opposed flat plate portions extending in the substantially vertical direction;
a steering column for rotatably supporting a steering shaft, the steering column having an expanded portion, formed by expanding a portion of a tubular material, that is to be in pressure contact with the pair of opposed flat plate portions of said vehicle body side bracket;
a shaft inserted through said pair of opposed flat plate portions and said expanded portion; and
an adjustment mechanism that acts on said shaft as an operation lever is rotated, for adjusting the distance between said pair of opposed flat plate portions,
wherein said steering column has a portion that is present in an area extending from said shaft up to at least said vehicle body mount portion and has a width larger than the width of a penetrated portion of said expanded portion at which said shaft is inserted through.

3. A position adjustable steering apparatus for a vehicle comprising:
a vehicle body side bracket having a vehicle body mount portion to be mounted on a vehicle body and paired left and right opposed flat plate portions extending in the substantially vertical direction;
a steering column for rotatably supporting a steering shaft, the steering column having a first expanded portion, formed by expanding a portion of a tubular material, that is to be in pressure contact with the pair of opposed flat plate portions of said vehicle body side bracket;
a shaft inserted through said pair of opposed flat plate portions and said first expanded portion; and
an adjustment mechanism that acts on said shaft as an operation lever is rotated, for adjusting the distance between said pair of opposed flat plate portions,
wherein said steering column has a second expanded portion expanded from a substantially center portion thereof at said vehicle body mount portion side, and
said steering column has a portion that is present in an area extending from said shaft up to at least said vehicle body mount portion and has a width substantially equal to the width of a penetrated portion of said first expanded portion at which said shaft is inserted through and the width of said second expanded portion.

4. A position adjustable steering apparatus for a vehicle comprising:
a vehicle body side bracket having a vehicle body mount portion to be mounted on a vehicle body and paired left and right opposed flat plate portions extending in the substantially vertical direction;
a steering column for rotatably supporting a steering shaft, the steering column having a first expanded portion, formed by expanding a portion of a tubular material, that is to be in pressure contact with the pair of opposed flat plate portions of said vehicle body side bracket;
a shaft inserted through said pair of opposed flat plate portions and said first expanded portion; and
an adjustment mechanism that acts on said shaft as an operation lever is rotated, for adjusting the distance between said pair of opposed flat plate portions,
wherein said steering column has a second expanded portion expanded from a substantially center portion thereof at said vehicle body mount portion side, and
said steering column has a portion that is present in an area extending from said shaft up to at least said vehicle body mount portion and has a width larger than the width of a penetrated portion of said first expanded portion at which said shaft is inserted through and the width of said second expanded portion.
